Europäisches Patentamt

European Patent Office

Office européen des brevets

(11) Publication number: **0 597 322 A2**

# EUROPEAN PATENT APPLICATION

(21) Application number: **93117411.4**

(22) Date of filing: **27.10.93**

(51) Int. Cl.5: **H02J 3/14**

(30) Priority: **12.11.92 IT MI922599**

(43) Date of publication of application:
**18.05.94 Bulletin 94/20**

(84) Designated Contracting States:
**CH DE FR GB IT LI**

(71) Applicant: **I.M.C. ELETTRONICA S.r.l.**
**Via Bramante, 36/38**
**I-20154 Milano(IT)**

(72) Inventor: **Narduzzo, Valerio**
**Via Matteotti, 32**
**I-20020 Arese, (Milano)(IT)**
Inventor: **Mezzoli, Franco**
**Via Apollonio,3**
**I-25100 Brescia(IT)**

(74) Representative: **Modiano, Guido, Dr.-Ing. et al**
**Modiano & Associati S.r.l.**
**Via Meravigli, 16**
**I-20123 Milano (IT)**

(54) Consumption management and control device particularly for civil electric systems.

(57) A consumption management and control device particularly for civil electric systems includes load activation means (1), which are interposed between the loads (2) and a mains supply line (3), and power consumption measurement means (4) inserted on the power supply line (3) to report instantaneous consumptions of the loads (2) to program-based control means (5). The program-based control means (5), by means of radio links (10), instruct the activation means (1) to selectively disconnect and connect the loads (2) from and to the power supply line (3). The program-based control means (5) comprise means for simulating magneto-thermal protection switches and means for simulating an average power overload, which report to the program-based control means (5) the passing of preset consumption thresholds.

Fig. 1

The present invention relates to a consumption management and control device particularly for civil electric systems.

Currently, some electric power utility companies apply high penalties to civil users, such as those installed in commercial establishments, if the average consumed power exceeds the maximum allowable value for more than a quarter of an hour in a month's supply.

In order to avoid such situations, commercial establishments are forced to draw up supply contracts for power values much higher than the power consumed on the average in the establishment, and this fact entails consequently a higher expense, since the supply fee and the rate for consumption are usually proportional to the installed power.

The aim of the present invention is to eliminate or substantially reduce the drawbacks described above by providing a consumption management and control device particularly for civil electric systems which allows to use a reduced allowable maximum power value with loads capable of consuming, all together, more power than the maximum allowable or contracted value.

Within the scope of the above aim, an object of the present invention is to provide a device which generally allows commercial establishments to eliminate the risk of excessive consumption in any situation.

Another object of the present invention is to provide a device which is highly reliable, relatively easy to manufacture and has competitive costs.

This aim, these objects and others which will become apparent hereinafter are achieved by a consumption management and control device particularly for civil electric systems according to the invention, characterized in that it comprises load activation means interposed between said loads and a mains supply line, and power consumption measurement means which are inserted on said power supply line and suitable to report instantaneous consumptions of said loads to program-based control means which, by means of radio links, can instruct said activation means selectively to disconnect and connect said loads from or to said power supply line, said program-based control means comprising means for simulating magneto-thermal protection switches and means for simulating an average power overload, which are suitable to report to said program-based control means the passing of preset consumption thresholds.

Further characteristics and advantages of the invention will become apparent from the following detailed description of a preferred but not exclusive embodiment of a consumption management and control device particularly for civil electric systems according to the invention, illustrated only by way of non-limitative example in the accompanying drawings, wherein:

figure 1 is a block diagram of the device according to the invention;

figure 2 is a block diagram of the activation means of the device;

figure 3 is a block diagram of the measurement means of the device;

figure 4 is a block diagram of the program-based control means of the device;

figure 5 is a block diagram of the means for simulating magneto-thermal protection switches of the device;

figure 6 is a block diagram of the transmission means of the device;

figure 7 is an X-Y chart of power management;

figure 8 is an X-Y chart of average consumption; and

figure 9 is a block diagram of the means for simulating the average power overload.

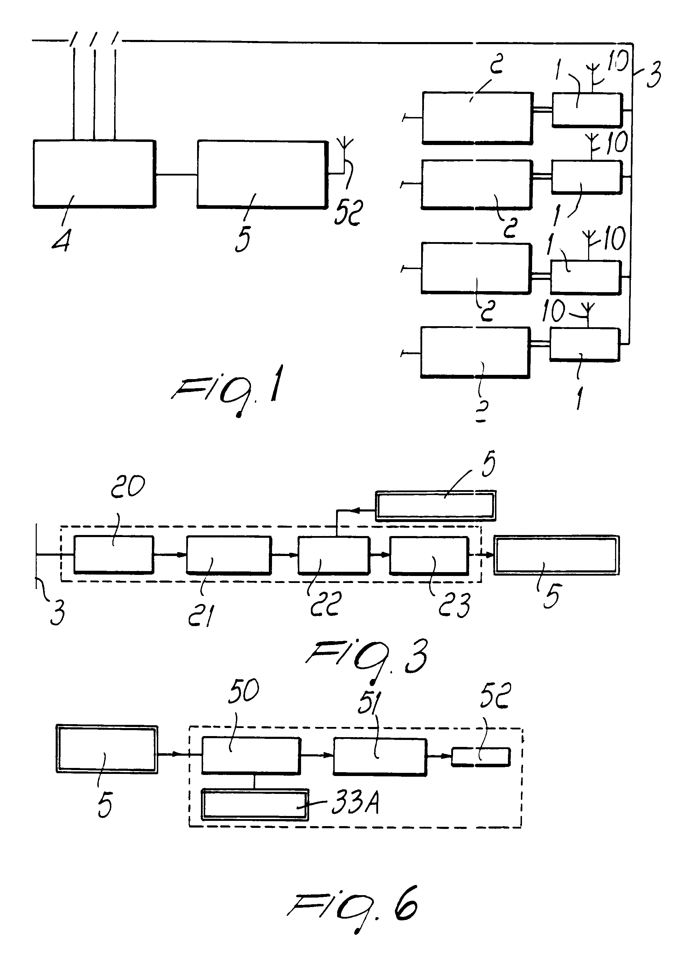

With reference to figure 1, a consumption management and control device particularly for civil electric systems comprises means 1, for activating loads 2, interposed between said loads and a mains power supply line 3, and power consumption measurement means 4 inserted on the power supply line 3 to report instantaneous consumptions of the loads 2 to program-based control means 5.

The program-based control means 5 instruct, by means of radio links, the activation means 1 to selectively disconnect and connect the loads 2 from and to the power supply line 3.

The program-based control means 5 comprise means 6 for simulating magneto-thermal protection switches and means 6A for simulating the average power overload, which report to the program-based control means the passing of preset consumption thresholds.

The activation means 1 comprise, as shown in figure 2, a receiving antenna 10 connected to a receiver 11 which separates the signal received by the antenna 10 into a transmission carrier, which has a preset frequency according to the applicable statutory provisions, and into a meaningful signal, which is sent to a decoder 12 which is provided with a decryption memory 13 containing the decryption codes and decodes the meaningful signal starting from the codes stored in the memory 13.

The decoder 12 sends a command signal, i.e. the decryption of the meaningful signal, to a restore circuit 14 which drives an interface 15 for controlling a relay 16 placed along the electric power supply line 3 to connect or disconnect said power supply line 3 to or from the respective load 2. Each one of the activation means 1 has its own power supply 17 which draws power from the power supply line 3 upstream of the relay 16.

The measurement means 4 comprise, as illustrated in figure 3, power sensors 20 which are arranged on the electric power supply line 3 and generate a signal which is proportional or correlated to the measured instantaneous power, sending it to signal attenuators 21 which are electrically connected to an end-of-scale sensor 22 which receives in input, in addition to the power signal in output from the attenuators 21, commands from the program-based control means 5.

The end-of-scale sensor 22 generates a signal which can be processed by a calculation circuit 23 which sends the result of the processing, i.e. a signal representing the instantaneous power, to the program-based control means 5.

The sensors 20 pick up mains voltage, current and frequency signals from the electric power supply network in order to adapt the measurement to the frequency found on the line.

With reference to figure 4, the program-based control means comprise a central processing unit 30 which is connected to at least one function keyboard 31 for data input, to a display 32 for user information, to a memory 33, and to an initialization and watchdog circuit 34.

The central processing unit 30 is connected, by means of the memory 33, to means 6A for simulating the average power overload, which send command signals to a unit 36 for managing the disconnection of the loads 2 and to transmission means 7. Furthermore, a power integrator 35 which receives in input the signal representing the instantaneous power which is generated by the measurement means 4 is connected to the means 6A for simulating the average power overload.

The power integrator 35 in practice manages a dynamic average-power window which is constantly updated on the basis of the average power of the latest update, of the instantaneous power after the latest update, and of the power trend during the last fifteen minutes.

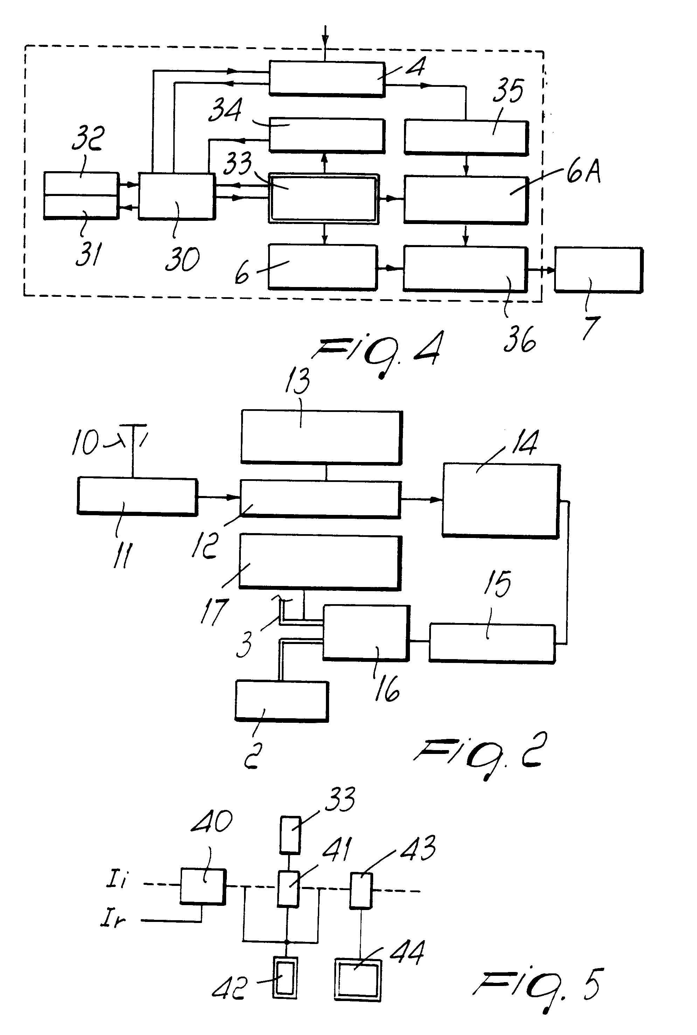

The means 6 for simulating protection switches (see figure 5) comprise a divider 40 the inputs of which receive a signal $I_i$, which represents the measured instantaneous power, and a signal $I_r$ for the adjusting of a protection switch. Their signal ratio is compared by a comparator 41 with preset consumption thresholds stored in the memory 33 and with preset sensitivity levels localized in an appropriate memory area 42.

The comparator 41 provides an alarm generator 43 with meaningful expected-consumption level signals, as clarified hereinafter. The alarm generator 43 compares these meaningful expected-consumption level signals with preset disconnection levels stored in a memory area 44 to generate a disconnection signal for each one of the activation means 1.

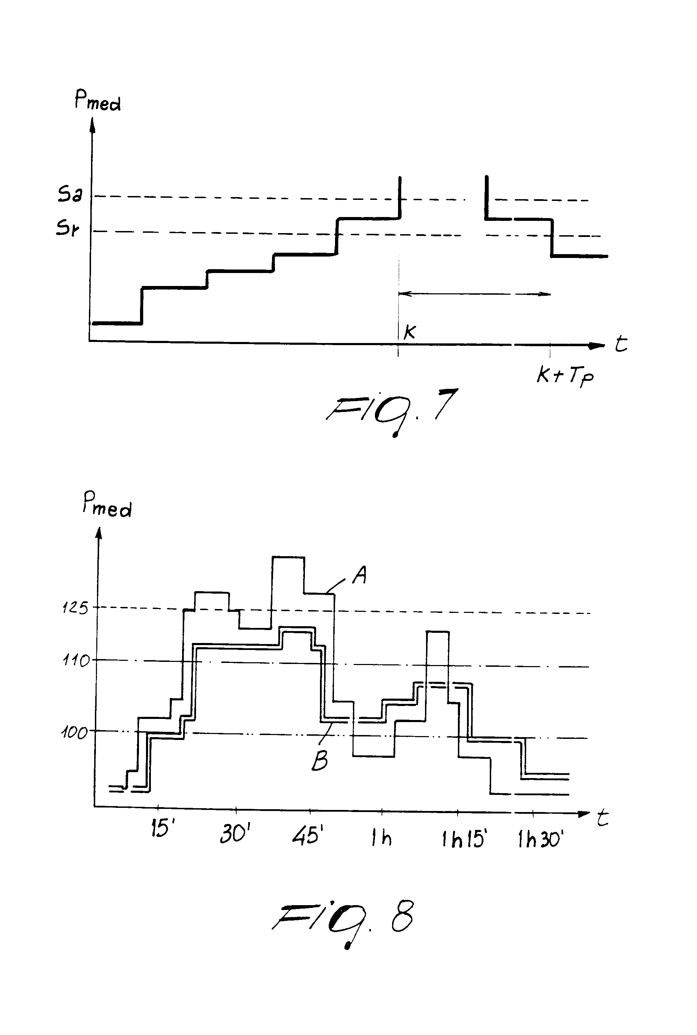

The transmission means 7 (see figure 6) comprise an encoder 50 which receives in input said disconnection signals and transmission encryption codes arriving from a memory 33A.

The signals, once encrypted, are sent to a radio transmitter 51 which mixes, in an appropriate and preset manner, the encrypted signal with a transmission carrier and transmits the resulting signal through an antenna 52 to the antennas 10 of the activation means.

The means 6A for simulating the average power overload comprise (see figure 9) a synchronization test circuit 60 which checks the synchronization of the device. The circuit 60 is connected to a unit 61 for managing the expected inhibition times, which calculates the expected inhibition times $T_p$, as clarified hereinafter.

A stage 62 for checking the load disconnection conditions is connected, via the unit 61, to the management unit 60 and checks the conditions, as clarified hereinafter, under which the loads 2 can be disconnected from the power supply line 3; their possible reconnection is instead checked in a load-reconnection checking stage 63 which is arranged downstream of the stage 62.

Finally, an interface 64 transmits the data generated by the stages and circuits 60, 61, 62 and 63 to the disconnection management unit 36 (figure 4), which performs the operations recommended by these data.

The problem of managing the various users which form the total load is linked to a system of priorities: i.e., the more a load is indispensable during a certain period of the day, the higher is its priority. It is furthermore necessary to set an indispensable-power condition, i.e. the maximum power usable by the loads to which maximum priority is assigned. Preferably, this maximum usable power is chosen equal to 60% of the maximum power, i.e. equal to the power value set in the supply contract. Instead, as regards the maximum installable power, by calculating all the loads it can be set equal to 200% of the power value contracted with the utility company.

For a generic priority level, power availability is linked to clearance for the operation of the highest-priority loads and to whether the average power is lower than the alarm threshold associated with the tier considered.

A priority level structure can be preset by selecting an absolute priority, in this case the structure comprising exclusively non-disconnectable, i.e. always-available, loads, an enhanced priority, a high priority, an average priority, and a low priority, i.e. a five-tier structure. Naturally, this solution can vary, by providing a greater or smaller number of priority levels. At each priority level it is furthermore necessary to provide a maximum number of loads which can be managed, in order to avoid overloads.

In view of these premises (figure 7) the device according to the invention, and in particular the program-based control means 5, by using the means 6A for simulating the average power overload, calculate the average power $P_{med}$ consumed in the last fifteen minutes starting from the instantaneous power measurements $P_i(k)$ measured by the power measurement means 4,

$$P_{med} = ( \overset{T}{\underset{T-15}{\Sigma}} P_i(k))/15 \qquad (i)$$

An alarm threshold $S_{a,i}$ for the disconnection of the loads set at the i-th level of priority, a load-reconnection threshold and a hysteresis inhibition time are assigned for each one of the above-mentioned priority levels. The overload condition for the disconnection of the loads of a generic level i is equal to:

$P_{med} > S_{a,i}$    (ii)

The inhibition time $T_p$ is the assumed time period during which the loads of the i-th level of priority must remain disabled following the passing of the associated alarm threshold $S_{a,i}$ until the average power drops below a reconnection threshold $S_{r,i}$. This time period is a function of the average power $P_{med}$, of the reconnection threshold $S_{r,i}$ of the i-th level of priority, of the instantaneous power $P_{ist}$ and of a weighed power $P_{peso}$ associated with the i-th level, i.e.:

$T_p = F(P_{med}, S_{r,i}, P_{ist}, P_{peso})$    (iii)

The condition for reconnecting the loads placed at the i-th level of priority is met if all the loads of the higher levels of priority have been enabled and if

$P_{med} < S_{r,i}$    (iv)

The disconnection policy can follow the criterion of low-priority to high-priority, whereas the reconnection policy can follow the opposite direction.

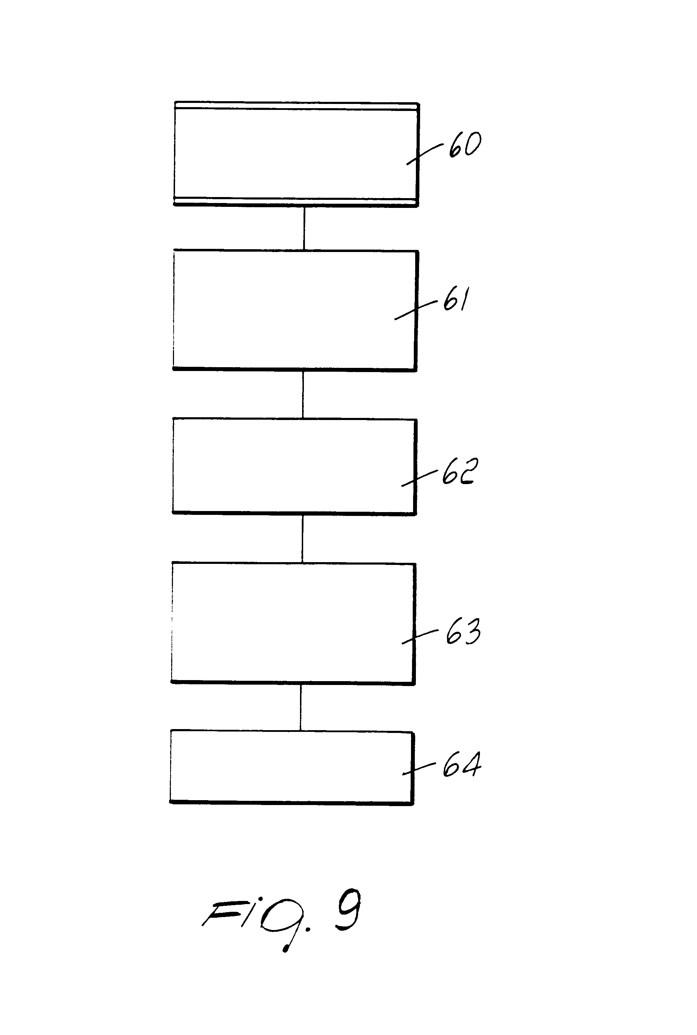

In figure 8, the broken line designated by the reference letter A represents the real consumption of a group of loads arranged on a power supply line without the device according to the invention, and the broken line designated by the reference letter B represents the real consumption of the same group of loads managed by means of the device according to the invention. As can be easily seen, line B never crosses the surcharge threshold, as instead occurs for line A.

The present invention, in addition to managing the loads according to the preceding description, emulates the operation of the magneto-thermal protection switch, in order to avoid the release of this switch on the watt-hour meter or rather on the meter of the utility company.

Emulation is performed by selecting, by means of the keyboard 31 and the display 32, a model stored in the memory 33, which takes into account the current and temperature characteristics of various magneto-thermal protection switches, and a parameter, i.e. thermal sensitivity, which allows to delay or advance the response, i.e. the opening, of the switch.

The emulation (figure 5) calculates the thermal state $L_{i,t}$ of the i-th priority level at the instant t according to the instantaneous current $I_t$ at the instant t, to the regulation current $I_r$ for adjusting the magneto-thermal switch, to the characteristic parameters M and to the thermal sensitivity S of the selected thermal model, whereas the alarm threshold $S_{t,i}$ of the i-th priority level is calculated according to the thermal state $L_{i,t}$ and to the alarm threshold $S_{a,i}$ of the i-th priority level, i.e.:

$L_{i,t} = F(L_{i,t-1}, I_t, I_r, M, S)$
$S_{t,i} = F(L_{i,t}, S_{a,i})$

The alarm state is verified if the condition $L_{i,t} > S_{a,i}$ occurs, and the i-th level is disabled, i.e. disconnected, for a period of not less than thirty seconds.

Practical tests have shown that the present invention achieves the intended aim and objects, by providing a device which avoids the passing of surcharge thresholds even though the total maximum absorbable power of the loads is much higher than the nominal power rating.

Advantageously, the device according to the invention allows to optimize the behavior of the magneto-thermal switch by managing the instantaneous power-absorption peaks to limit interventions of the magneto-thermal switch caused by instantaneous overload.

Conveniently, the device according to the invention optimizes the average power consumptions, distributing power demands in time, thus limiting the power engaged by the user.

Furthermore, by using the radio link to send connection and disconnection commands, it eliminates the need, well-known in currently marketed devices, to increase the number of wires in the local electric network to provide for a disconnection system.

The invention thus conceived is susceptible to numerous modifications and variations, all of which are within the scope of the inventive concept. All the details may furthermore be replaced with other technically equivalent elements.

In practice, the materials employed, as well as the dimensions, may be any according to the requirements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

**Claims**

1. Consumption management and control device particularly for civil electric systems, characterized in that it comprises load activation means (1) interposed between loads (2) and a mains supply line (3), and power consumption measurement means (4) which are inserted on said power supply line (3) and suitable to report instantaneous consumptions of said loads (2) to program-based control means (5) which, by means of radio links (10), can instruct said activation means (1) to selectively disconnect and connect said loads (2) from or to said power supply line (3), said program-based control means (5) comprising means (6) for simulating magneto-thermal protection switches and means (6A) for simulating an average power overload, which are suitable to report to said program-based control means (5) the passing of preset consumption thresholds.

2. Device according to claim 1, characterized in that said activation means (1) comprise a receiving antenna (10) connected to a receiver (11) which is suitable to separate a transmission carrier from a meaningful signal and to which a decoder (12) provided with a decryption memory (13) is connected, said decoder (12) being suitable to decrypt said meaningful signal and sending a signal to a restore circuit (14) which drives an interface (15) for controlling a relay (16) which is placed along said electric power supply line (3) and is suitable to selectively connect and disconnect said power supply line (3) to and from said load (2).

3. Device according to the preceding claims, characterized in that said measurement means (4) comprise power sensors (20) which are arranged on said electric power supply line (3), generate a signal proportional to the instantaneous power and are connected to signal attenuators (21) which are electrically connected to an end-of-scale sensor (22) which receives in input commands from said program-based control means (5), said end-of-scale sensor (22) generating a signal which can be processed by a calculation circuit (23) which sends to said program-based control means (5) a signal representing said instantaneous power.

4. Device according to one or more of the preceding claims, characterized in that said program-based control means (5) comprise a central processing unit (30) which is connected to at least one function keyboard (31) for data input, to a user information display (32), to a memory (33) and to an initialization and watchdog circuit (34), said memory (33) being connected, together with a power integrator (35) connected to said calculation circuit (23), to said means (6A) for simulating the average power overload, said simulation means sending disconnection signals to transmission means (7).

5. Device according to one or more of the preceding claims, characterized in that said means (6) for simulating protection switches comprise a divider (40) the inputs of which receive a signal ($I_i$) representing the instantaneous power and a signal ($I_r$) for adjusting a protection switch, their ratio being compared by a comparator (41) with preset consumption thresholds and alarm thresholds stored in said memory (33, 42, 44), said comparator (41) providing an alarm generator (43) with meaningful expected-consumption level signals, said alarm generator (43) being suitable to compare said meaningful expected-consumption level signals with preset disconnection levels and to generate a disconnection signal for each one of said activation means (1).

6. Device according to one or more of the preceding claims, characterized in that said transmission means (7) comprise an encoder (50) which receives in input said disconnection signals and transmission codes arriving from said memory (33A), said signals, once encrypted, being sent to a radio transmitter (51) which is suitable to mix said encrypted signal with a transmission carrier and to transmit it through an antenna (52) to said activation means (1).

Fig.1

Fig.3

Fig. 6

*Fig. 4*

*Fig. 2*

*Fig. 5*

Fig. 7

Fig. 8

60

61

62

63

64

FiQ. 9